# EUROPEAN PATENT SPECIFICATION

(11) **EP 0 557 297 B1**
(45) Date of publication and mention of the grant of the patent: **24.02.1999**
(21) Application number: 91917648.7
(22) Date of filing: 14.11.1990
(51) Int. Cl.: H04Q 1/00, H01F 5/00, G06K 7/08, G06K 19/07

(54) **METHOD AND APPARATUS FOR MODULATING AND DETECTING A SUBCARRIER SIGNAL FOR AN INDUCTIVELY COUPLED TRANSPONDER**
VERFAHREN UND GERÄT ZUR MODULATION UND DETEKTION EINES HILFSTRÄGERSIGNALS FÜR EINEN TRANSPONDER MIT INDUKTIVER KOPPLUNG
PROCEDE ET APPAREIL SERVANT A MODULER ET A DETECTER UN SIGNAL DE SOUS-PORTEUSE POUR UN REPONDEUR A COUPLAGE INDUCTIF

(43) Date of publication of application: 01.09.1993
(73) Proprietor: Algernon Promotions, Inc., Panama 5 (PA)
(72) Inventor: TROYK, Philip, R., Morton Grove, IL 60053 (US); DeMICHELE, Glenn, A., Chicago, IL 60625 (US)
(74) Representative: Witte, Alexander, Dr.-Ing.
(86) International application number: US9006661
(87) International publication number: WO9209175

(56) References cited:
- WO-A-88/03687
- WO-A-89/05067
- US-A- 4 654 658
- US-A- 4 656 472

## Description

The present invention relates to an inductively coupled information retrieval system, comprising interrogator means for transmitting an electromagnetic field, receiving a phase modulated subcarrier signal, and analyzing said phase modulated subcarrier signal to detect information conveyed thereby, said interrogator means including a support means, means for generating a first power signal for use in generating said field; a transmitter coil affixed to said support means for receiving said first power signal and transmitting said field, receiver coil means for receiving said phase modulated subcarrier signal; and processing means operative to analyze and display said information; a transponder, including a transponder coil operative to receive said flux field and convert electromagnetic energy contained therein into an AC power signal, said transponder coil also being operative to receive a phase modulated power signal and modulate said field with said phase modulated subcarrier signal, and a transponder circuit assembly encoded with said information and in communication with said transponder coil for receiving said AC power signal and outputting said information.

The present invention relates further to a method of generating an electromagnetic identifying signal in response to receipt of a transmitted electromagnetic interrogating signal alternating at a first frequency, comprising converting the received interrogating signal into a power signal, a clock signal and a modulating signal including a series of pulses occurring at a second frequency, using said clock signal to retrieve at a predetermined bit rate a stored identifying digitally coded signal comprised of a string of "1" bits of a first logic state and "0" bits of a second logic state, phase shifting said modulating signal with the retrieved digitally coded signal, and retransmitting the electromagnetic identifying signal in the form of a phase modulated subcarrier signal.

Finally, the invention relates to a a transponder for generating an electromagnetic identifying signal in response to receipt of a transmitted electromagnetic interrogating signal alternating at a first frequency, comprising first means for receiving and converting the received interrogating signal into a power signal, a clock signal, and a modulating signal including a series of pulses occurring at a second frequency; data storage means for storing an identifying, digitally coded signal comprised of a string of "1" bits of a first logic state and "0" bits of a second logic state; second means responsive to said power signal and said clock signal and operative to retrieve the stored digitally coded signal from said storage means and to output same at a predetermined bit rate; third means for phase shifting said modulating signal with the retrieved digitally coded signal; and fourth means for using said phase shifted modulating signal to modulate said interrogating signal and to retransmit said electromagnetic identifying signal in the form of a subcarrier signal.

Such an inductively coupled information retrieval system, such a method of generating an electromagnetic identifying signal in response to receipt of a transmitted electromagnetic interrogating signal, and such a transponder are known from WO 88/03687.

A similar information retrieval system is known from WO 89/05067 wherein, however, retrieved data is transmitted by frequency modulating the power induction signal.

The present invention relates generally to inductively coupled electromagnetic energy field transmission and detection systems, such as a transponder in combination with an interrogation system, and more particularly to a method and apparatus for modulating and detecting an inductively coupled transponder subcarrier signal increasing the strength and detectability of an inductively coupled transponder signal.

Many objects, such as houses, pets and cars, require some means of identification. Many prior art methods of identification have required visual interrogation of the identifying medium to extract the identification data, such as reading numbers on houses, license plates on cars, and collar tags or brands on animals. Electronic identification tags have also been created, which can be associated with the object and electronically communicated with at a distance, such as the electronic sensing and actuator systems shown in U.S. Pat. Nos. 3,732,465 and 3,752,960.

The systems described in those patents are comprised of an active element, having a single transmitting and receiving coil, which operates by transmitting an electromagnetic field within the proximity of a passive electrical circuit, thereby inductively coupling the coil with the passive circuit. The passive circuit operates to create a characteristic change in the transmitted electromagnetic field that can be detected by the electronics associated with the receiving coil and used to trigger some mode of operation for the system. Although such systems remove some of the restrictions associated with the previously described visual identification systems, such systems are really nothing more than electronic keys, and actually convey less information to the active element than does a visually inspectable tag.

More sophisticated electronic systems use an exciter coil to transmit a high intensity electromagnetic energy field in the proximity of an electronic tag or transponder. The transponder is energized by the electrical energy inductively transferred by the transmitted magnetic field and is made operative to output a modulated identification signal which can be detected by an inductively coupled receiving coil proximately located at the exciter coil. The passive tag or transponder element of many of these devices, such as that described in U.S. Pat. No. 4,262,632, includes a coil which receives electromagnetic energy from a transmitted interrogation signal and retransmits an identification signal developed by the identification circuitry associated with the transponder. Electrical control circuitry within the transponder converts and rectifies the energy received from the transponder coil and develops a dc power source for use in operating the transponder's identification circuitry.

Transponders which utilize a sufficiently large capacitor or resident power source, such as a battery, are able to transmit identification signals over fairly large distances, from a few yards to thousands of feet. However, in certain applications, such as identifying small animals, the size of the sealed packaging required to house the battery or capacitor may be too large for the intended use.

A great amount of effort has been expended to develop a truly passive transponder, which will do more than simply operate as an electronic key. A transponder which can be safely implanted within livestock and interrogated from a practical distance would help to reduce problems associated with certain regulations being implemented by the European Economic Community that will require all livestock to be separately identified.

One effort to create such a transponder resulted in the syringe-implantable transponder of European Patent No. 258,415. This patent and other related patented systems, such as U.S. Pat. Nos. 3,859,624, 3,689,885, 4,532,932 and 4,361,153, disclose passive elements which operate in real time and therefore do not require any type of significant energy storage means. The transmitting and receiving units of these systems, which are often referred to as interrogators or readers, typically include either a single, dual or triple coil arrangement, which is used to both transmit a high intensity electromagnetic field in proximity of the identification unit and receive an identification signal retransmitted by the transponder in proximity of the reader coils of the interrogator.

The detection range of such systems is typically very restricted since the strength of the electromagnetic field produced by the transponder drops by 1/d⁵, at the receiver, where d is the distance between the receiving coil and the transponder coil, as the interrogator is moved away from the transponder. In fact, it has been calculated that at distances of 6 to 8 inches the strength of the magnetic field carrying the identification signal from the transponder, in devices similar to that described in the European Patent No. 258,415, is only an estimated one billionth the strength of the magnetic field carrying the interrogation signal to the transponder. Hence, the interrogator must normally be placed in very close proximity to the transponder in order for the identification signal to be detected. This limitation, of course, greatly restricts the utility of such devices, since not all objects may be so closely approached in order to be read.

Although the specification of European Patent No. 258,415 states that the system disclosed therein is operative to detect the retransmitted signal at distances on the order of inches, it has been found that devices constructed in accordance with that specification are actually incapable of obtaining such a range and are generally only effective when positioned within about an inch of the transponder. An identification device which is limited to operation within such a small range is of limited usefulness, especially when it is to be used to identify large or wild animals or other objects which cannot be readily approached.

If a transponder system is to be expected to maintain a greater reading distance, a number of different characteristics of the system must be considered. To increase or maintain a certain reading distance, the interrogator's ability to detect the identification signal transmitted by the transponder must be enhanced. A limitation restricting the reading distance of the transponder system is associated with the strength of the signal transmitted from the transponder to the reader. Hence, it is not only important to assure that an efficient inductive couple exists between the interrogator and the transponder, so that the transponder receives as much energy for operation as is possible, but it is also important to maximize the strength of the signal transmitted from the transponder to the interrogator.

Prior art transponder systems not only generally fail to provide for an efficient coupling between the interrogator and the transponder, but also fail to maximize the strength of the transponder signal. One reason prior art systems do not maximize the transponder signal is because the physical and electrical configurations of the interrogator's transmitting and receiving coils require that the frequency of the transponder signal be significantly different from that of the interrogator signal, thereby limiting the frequency and amplitude of the subcarrier signal. For example, U.S. Pat. No. 3,689,885 states that "[i]t has been found that by having the carrier time-base signal at a comparatively high frequency such as, for example f_{z} = 450 KHz, and the electromagnetic power field at a lower frequency, for example, f₁ = 50 KHz, interference between the electromagnetic coded information field and the electromagnetic power field is minimized." Col. 7, lines 11-17.

The efficiency and speed of many of the prior art transponder systems is also restricted by the type of modulation technique used to modulate the subcarrier. Many prior art systems use frequency-shift-keyed modulation for modulating the transponder's subcarrier, which generally requires fairly complex circuitry and which severely limits the data transfer rate of the subcarrier. U.S. Pat. No. 3,964,024 discloses a transponder system which utilizes phase-shift modulation for modulating the subcarrier, a technique which reduces the complexity of the circuitry required in the transponder, generally enhances the efficiency of the band-width, and increases the data rate of the subcarrier. However, this modulation technique requires that the transponder be equipped with two separately located coils, one for receiving power from the interrogator and one for transmitting the identification signal. In addition, since the data bit shifts high or low each time a phase change occurs, this technique does not anticipate a change in the orientation of the transponder resulting in a phase shift of the incoming signal or the transmitted signals.

Hence, a need has arisen for a transmission and detection system which can simultaneously transmit a high energy magnetic field, sufficient to power the transponder unit, and detect a localized retransmitted magnetic field at greater distances and with greater reliability.

It is therefore an object of the present invention to provide a novel electromagnetic field transmission and detection system which can simultaneously transmit a high intensity magnetic field and detect a localized low intensity magnetic field.

Another object of the present invention is to provide a novel electromagnetic field transmission and detection system which can accurately detect a localized low-intensity magnetic field in the presence of a high-intensity magnetic field, or other uniform electromagnetic interference or noise.

A further object of the present invention is to provide a novel electromagnetic field transmission and detection system which is capable of accurately detecting very low-energy magnetic fields within a range of at least 6-8 inches from the low-energy field transmission source.

A further object of the present invention is to provide a method and apparatus for modulating the subcarrier signal transmitted by the transponder so as to maximize the amplitude of that signal.

A still further object of the present invention is to provide a method and apparatus for modulating the subcarrier signal transmitted by a moving transponder so as to accurately detect said subcarrier with the interrogator.

The above mentioned objects are achieved by the inductively coupled information retrieval system, mentioned at the outset, wherein said transmitter coil includes one or more conductive windings circumscribing a substantially polygonal volume of space having a central axis, said transmitter coil being adapted to generate said magnetic flux field within said volume, and wherein said receiver coil means are first and second receiver coils disposed within said volume of space at significantly separated points and adapted to have linking relationships with portions of said flux field, said first and second receiver coils being electrically connected to each other in a differential circuit relationship such that the magnitude of electrical signals induced in said first and second receiver coils by electromagnetic energy transmitted by said transmitter coil are substantially equal and opposite to each other, said first and second receiver coils being further disposed such that electromagnetic energy generated by said phase modulated subcarrier signal and passing through at least one of said first and second receiver coils will induce an electrical signal of greater magnitude in one receiver coil than will be induced in the other receiver coil and cause a current to flow in said differential circuit which corresponds to the amount of energy generated and the information conveyed by said subcarrier signal, wherein said processing means is responsive to said current flowing in said differential circuit, and wherein said transponder circuit assembly causes periodic electric shorting of said transponder coil the change of phase of which results in a shift in the phase of said subcarrier signal, said phase modulated subcarrier signal being modulated to change phase when a logic "0" data bit representing some of said information is to be transmitted and to not change phase when a logic "1" data bit representing some of said information is to be transmitted, whereby said interrogator means need only analyze absolute changes in the phase of said subcarrier signal in order to correctly determine the logic of the data bits being transmitted and to detect said information.

The above objects are further achieved by the method of generating an electromagnetic identifying signal, mentioned at the outset, wherein said digitally coded signal is used to shift the phase of a block of said modulating signal pulses when the state of a particular bit of said coded signal is of said first state, and to not shift the phase of a like block of said modulating signal pulses when the state of a bit is of said second state, and wherein the phase-shifted modulating signal is used to amplitude-modulate said interrogating signal and to cause the resulting electromagnetic identifying signal to be retransmitted in the form of a subcarrier signal the phase of which is shifted by 180° when a "1" bit is retransmitted and is not shifted when a "0" bit is retransmitted.

Finally, the above objects are achieved by a transponder, mentioned at the outset, wherein said second frequency is equal to one half of said first frequency, wherein said third means are responsive to the retrieved digitally coded signal and operative to shift the phase of a block of said modulating signal pulses when the state of a particular bit of said coded signal is of said first state, and to not shift the phase of a like block of said modulating signal pulses when the state of another bit of said coded signal is of said second state, and wherein said fourth means are responsive to the shifted and unshifted blocks of modulating signal pulses and operative to cause said first means to amplitude-modulate the received interrogating signal and cause an electromagnetic identifying signal to be retransmitted in the form of a subcarrier signal at said second frequency the phase of which is shifted by 180° when a "1" bit is being retransmitted and the phase of which is not shifted when a "0" bit is being retransmitted.

Briefly, a preferred embodiment of the present invention comprises a transponder system including a transponder and an interrogator having a transmission coil for producing a high-intensity electromagnetic field for inductively powering the transponder and two receiver coils for receiving a low-intensity electromagnetic field reradiated by the transponder. The transmission coil includes one or more conductive windings circumscribing a substantially polygonal volume of space. The receiver coils are diametrically disposed opposite one another within the volume space of the transmitter and are electrically connected to each other in a differential circuit relationship, the output of which is at a minimum when the two receiver coils receive approximately equal quantities of energy and is at a maximum when one of the receiver coils receives more electromagnetic energy from the transponder than the other receiver coil. The transponder uses a coil to derive both a power source and a clock pulse from the high-intensity field for powering and driving an identification circuit. The transponder's identification circuit then operates to divide the frequency of the clock pulse by 8 to drive its memory array and logic network so that a new data bit is clocked out every 16 cycles of the carrier frequency. The memory array is constructed to produce a new data bit on the rising edges of its input clock pulse. This results in an effective divide by two stage internal to the memory array, which results in the output of a new data bit every 16 cycles of the carrier. The same clock pulse is then used to generate the subcarrier which is at 1/2 the frequency of the carrier. The choice of 1/2 the carrier frequency as the subcarrier frequency maximizes the amplitude of the transmitted subcarrier. This subcarrier is then phase modulated by the output of a logic network so that one bit is encoded every 8 cycles of the subcarrier. This corresponds to one bit every 16 cycles of the carrier. The transponder also includes a double pulse lockout circuit which prevents rapid consecutive short-outs of the transponder's coil.

These and other objects of the present invention will no doubt become apparent to those skilled in the art after having read the following detailed disclosure of a preferred embodiment which is illustrated in the several figures of the drawing.
Fig. 1 is a partially-broken, perspective view of an application of an electromagnetic transmission and detection apparatus in accordance with the preferred embodiment of the present invention.
Fig. 2 is a partially-broken, perspective view of the transmission coil and receiving coils of the apparatus of Fig. 1 in accordance with the preferred embodiment of the present invention;
Fig. 3 is a diagram shematically illustrating the differencial circuit relationship of the receiving coils of the apparatus in accordance with the preferred embodiment of the present invention;
Fig. 4 is a partially-broken, perspective view of an alternative embodiment of the transmission coil and receiving coils of the present invention;
Fig. 5 is a diagram schematically illustrating a transponder assembly circuit in accordance with the preferred embodiment of the present invention;
Fig. 6 is a diagram schematically illustrating an interrogator/receiver circuit in accordance with the preferred embodiment of the present invention;
Fig. 7 is a timing diagram illustrating the relationship between the modulation waveforms present at various locations in the transponder and at various locations in the interrogator/receiver;
Fig. 8 is a timing diagram illustrating a typical bit sequence of a bit stream modulated in accordance with the preferred embodiment of the present invention; and
Fig. 9 is a diagram schematically illustrating the full-wave bridge rectifier of Fig. 5.

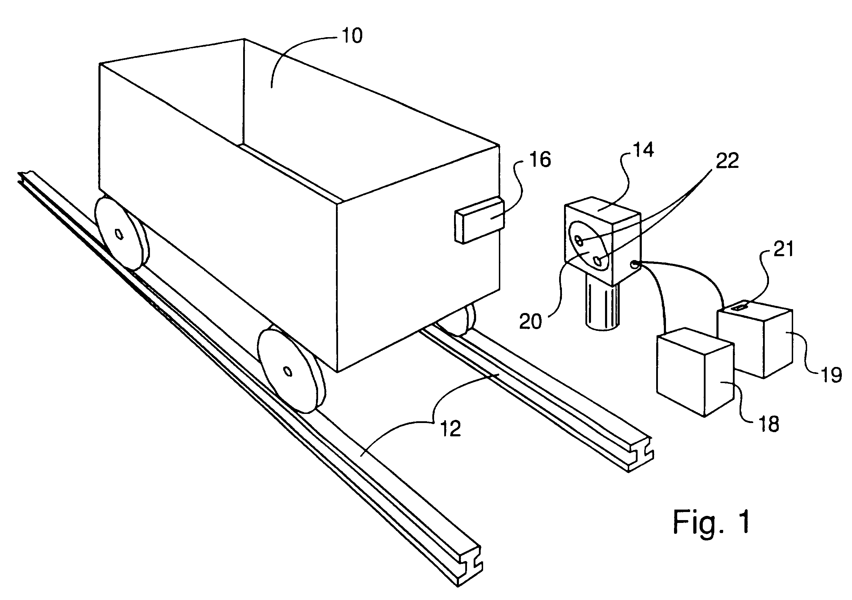

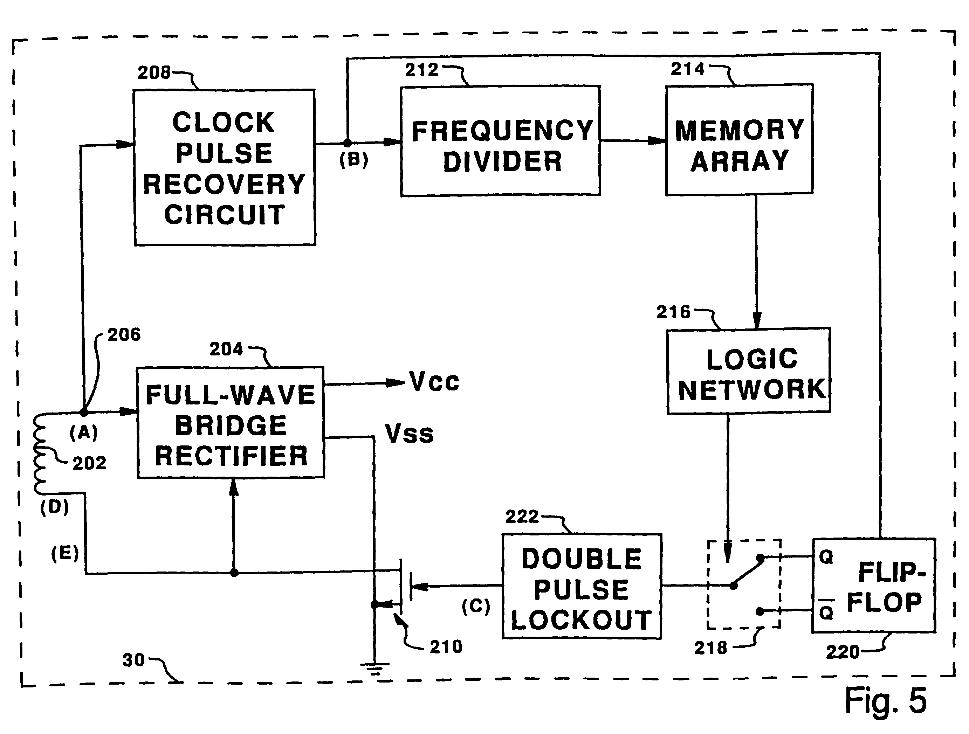

Figure 1 illustrates a box car 10 travelling along rail lines 12 so as to pass along the front side of an interrogator or reader 14. Attached to the front of the box car is an identification box 16, which contains a transponder device in accordance with the preferred embodiment of the present invention, which will be further described with subsequent reference to Figs. 5 through 9.

This identification device is positioned so as to pass within close proximity of the reader 14, which contains a transmitter coil 20 for transmitting a high-intensity electromagnetic field to the identification box and two receiver coils, shown generally as 22, for receiving the low-intensity electromagnetic field retransmitted by the transmitter of the identification box 16. A generator 18 supplies power to the transmitter coil to produce the high intensity electromagnetic field. A display and storage device 19 receives the output of reader 14 for storage and display of the content of the identification signal contained therein at display 21.

It should be noted that although the reader 14 is shown in communication with a passive identification device for purposes of the present invention, the electromagnetic transmission and detection apparatus of the present invention could be utilized in any of a number of applications where it is necessary to accurately detect a low-intensity electromagnetic field in the presence of uniform high-intensity electromagnetic fields.

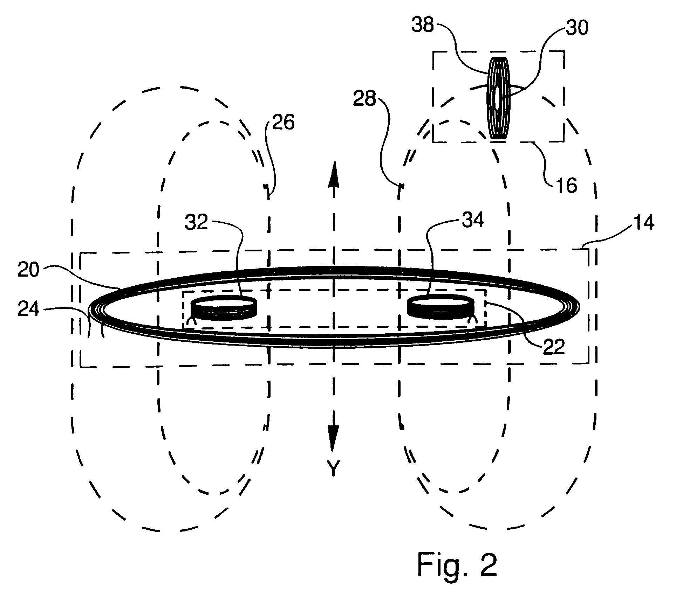

The operation of the reader 14 may be better illustrated with reference now to Figure 2, which illustrates transmitter coil 20 and the two differential receiver coils 22 of the preferred embodiment of the present invention. The number of windings utilized to create these coils, as well as the shape of the coils, can vary significantly. In general, the coils are substantially polygonal in shape, wherein a polygon is defined to mean a figure having many sides and a circle is assumed to be comprised of numerous straight lines rather than a true circle. Hence, the windings of the coils circumscribe a substantially polygonal volume of space, and the large outer transmitter coil 20 of the reader is generally comprised of about 20 turns of copper wire 24 wound in a polygonal manner so as to create a coil having a diameter, or polygonal diameter, of about 5 to 6 inches.

In all embodiments, the transmitter coil 20 and differential receiver coils 22 are ordinarily affixed to a suitable nonconductive support structure so as to be positionable as shown in Fig. 1. Support surfaces, such as the type required to support the coils of the present invention, are well known in the art, i.e., hand-held pistol-shaped scanner structures and wand-like antennas or scanner structures, and can be constructed so as to support the coils in any of a large number of different configurations. As will be noted below, many of the alternative embodiments of the present invention will require a support structure constructed in a manner different than that depicted in Fig. 1. In this regard, it is only important to note that the support should be constructed from such a material and in such a manner so as to not significantly interfere with the passage of electromagnetic energy to or from the coils.

When sufficient power is supplied to the transmitter coil 20, such that there is more electrical energy present in the coil than can be dissipated by the resistance of the coil, substantially toroidal-shaped electromagnetic energy fields, such as the flux fields 26 and 28, will be produced. Although the electromagnetic flux fields 26 and 28 are three-dimensional in nature, circumscribe the polygonal volume of the transmitter coil, and are not bounded within the defined limits depicted in Fig. 2, these electromagnetic flux fields will be illustrated by dashed lines 26 and 28 for the sake of simplicity. It should also be noted that the basic shape of the electromagnetic flux fields will be varied depending on the positioning of the differential receiver coils 22 with respect to the transmitter coil 20, as further described below.

When a passive identification device, such as the transponder assembly 30 of the identification box 16 is within the transmission and power range of the transmitter coil 20, some of the energy contained within the transmission fields will be transferred to the transponder assembly 30 through inductive coupling. The voltage extracted by the transponder's receiving coil (not shown in Fig. 2, but shown in Fig. 5) from the transmission field can then be used to power the electronic identification circuitry of the transponder, and in turn cause a modulated identification signal (in the form of current) to flow back through the coil of the transponder. Since the quantity of energy created by means of the inductive couple is small, and a certain quantity of that energy is utilized to operate the electronic circuitry of the transponder, the transponder coil is only capable of retransmitting a very low-intensity electromagnetic field of a highly localized nature.

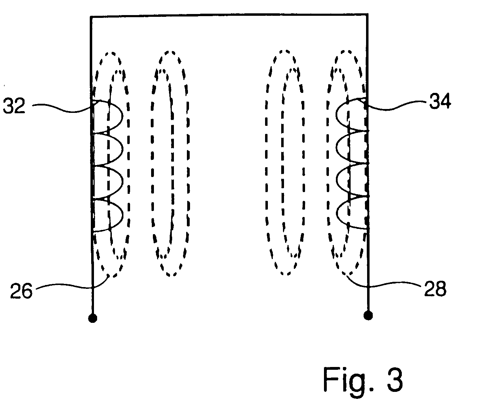

The differential receiver coils 22 are comprised of two substantially polygonal coils 32 and 34, which are electrically connected to one another in a differential circuit relationship such that the electrical signals induced within the coils by electromagnetic energy are subtracted from one another so as to form a differential output signal. A schematic illustration of the differential coils 22 is shown in Fig. 3.

Receiver coils 32 and 34 are disposed within the volume space of the transmitter at significantly separated points. Preferably, the receiver coils and the transmitter coil are co-planar and the receiver coils are disposed in diametrically opposite positions. Since the receiver coils are positioned within the volume space of the transmitter coil, both receiver coils share a linking relationship with the flux fields 26 and 28. It is preferable to have the receiver coils diametrically opposed so that there is assurance that the receiver coils will be linked with substantially identical portions of the flux field, so that when the output of the receiver coils are subtracted, the difference will be close to zero.

It is also desirable to separate the receiver coils by some significant distance so that both receiving coils will not receive equally intense transmissions from the transponder. Since the strength of the transponder field typically drops off at the rate of 1/d⁵, at the receiver coils, separating the receiver coils will help to assure that the energy of the transponder field is primarily only received by one receiver coil. Naturally, the differential receiver coils will work if disposed in positions that are not diametrically opposed, and therefore not separated by as large of a distance. Thus, as long as the receiver coils are not positioned adjacent to one another, there should be some significant difference in the energy received by each receiver coil from the transponder.

It should also be noted that because of the related positions of the receiver coils, both coils would also generally receive approximately equal levels of substantially uniform interference energy created by other nearby transmission sources. The positioning of the receiver coils 22 within the transmitter coil 20 is an important aspect of the present invention, in that it allows the presence of the substantially equal and opposite transmission fields, together with other substantially uniform magnetic fields, to be cancelled by the differential nature of the two coils. Hence, by differentially electrically connecting the receiver coils so as to subtract the output signals of the individual coils from one another, it is possible to produce a combined output signal which has a near zero voltage amplitude when the two coils receive approximately equal quantities of energy, and a maximum voltage amplitude when one of the coils receives more energy from an electromagnetic field than does the other receiver coil.

Alternatively, it may also be desirable in some instances to modify the range or area covered by the transmission and detection fields of the reader 14. Possible methods of doing this would be to modify the shape or physical configurations of the receiver coils, move the receiver coils away from the plane of the transmitter coil, or rotate the receiver coils by some angle, such that their central axes are no longer parallel to the Y-axis of the transmitter 20.

It is important to note, however, that when the receiver coils or the receiver coils position's are modified in any such manner, the electrical symmetry of the reader system must be maintained such that more of the energy of the transponder field can be intercepted by one receiver coil than the other receiver coil, or else the differential coils will not be able to accurately detect the presence of the transponder. It is also important to note that in the event that modifications cause the receiver coils to be linked with flux fields of different or variable intensities, the physical or electrical characteristics of the receiver coils can correspondingly be modified, such that even if the receiver coils are not symmetrical with respect to the energy received, the differential output signal can still be zero when both coils are exposed to substantially uniform fields.

When the reader is configured as shown in Fig. 2, it is known that the reader 14 can accurately detect the presence of the transponder 30 at distances of up to at least 8 inches away. Once again, this increase in detection range over the prior art relates to the reader's ability to cancel out the relative presence of all but the transponder field when that field is primarily detected by only one receiver coil. The ability of the reader 14 to detect the transponder assembly 30 at such distances is also enhanced by the transponder assembly and modulation technique of the preferred embodiment of the present invention, as will be described below.

With reference to the particular arrangement of the various coils depicted in Fig. 1, the transponder 30 is positioned so as to receive the magnetic field generated by the transmitting coil 20. As previously stated, the strength of the electromagnetic field 38 retransmitted by the transponder is so small that it is effectively incapable of being detected by the transmitter coil. The transponder field 38 is, however, within the detectable range of the receiving coil 34. This is true because when the difference between the output of coil 32 is taken from the output of coil 34, the amplitude of the combined output signal will be greater than zero volts by an amount which corresponds to the energy transferred by field 38, thereby indicating the presence of the transponder and allowing for detection of the modulated identification signal contained within the field 38. In other words, the placement of the two receiver coils within the cylindrical volume of space of the transmission coil creates a high sensitivity to the transponder field and a low sensitivity to the transmitter field.

In order to be sensitive to the small transponder field, the receiver coils 32 and 34 should be formed from a sufficiently large number of turns of wire, i.e., 600 turns, so as to be sufficiently sensitive to the transponder field. The polygonal diameter of the two receiver coils should also each be smaller than the diameter of the transmitter coil, although this is not an absolute requirement if electrical symmetry is maintained. In the preferred embodiment, the receiver coils 22 are each approximately 20% of the diameter of the transmitter coil. Hence, when the diameter of the transmitter coil is 5-6 inches, the diameter of the receiver coils should be approximately 3/4 to 1 1/4 inches.

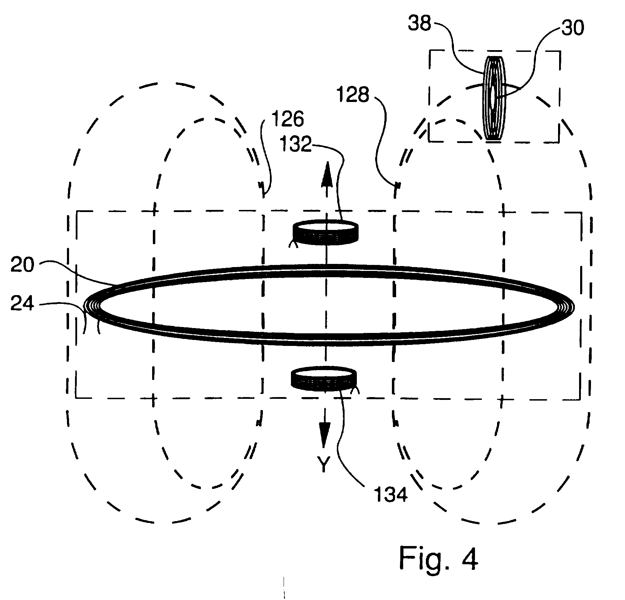

An alternative embodiment of the present invention is depicted in Fig. 4, in which the two receiving coils 132 and 134 are more or less placed on top of one another, so as to be substantially, coaxially positioned along the central axis of the transmitting coil 20. Since the transponder 30 can only be located on one side of the transmitting coil 20 at any one time, the energy of the transponder field 38 will generally only induce an electrical signal in one of the receiving coils and not the other. Because of the substantially symmetrical positioning of the receiving coils 132 and 134 about the transmitter coil 20, the receiving coils will link with substantially identical portions of the flux fields 126 and 128. Hence, the differential coil effect of the two receiving coils will allow the low intensity magnetic field of the transponder to be detected despite the presence of the high intensity transmitter fields.

It is anticipated that the two receiving coils of the present invention could also be shaped, disposed and oriented in a number of other shapes and positions within the volume space of the transmitter coil and achieve the differential detection effect described in reference to the preferred and alternative embodiments.

Although the differential receiving coils 22 of the present invention can extend the range over which the transponder assembly's signals can be detected, this range can be further extended, or at least maintained, if the strength of the transponder field 38 is increased. Since it is desirable to increase the strength of the transponder signal without increasing the size or complexity of the transponder assembly, various means, which are unknown in the prior art, must be developed to derive such power. One such means can be demonstrated with reference now to Fig. 5, which schematically illustrates a transponder assembly circuit 30 in accordance with the preferred embodiment of the present invention.

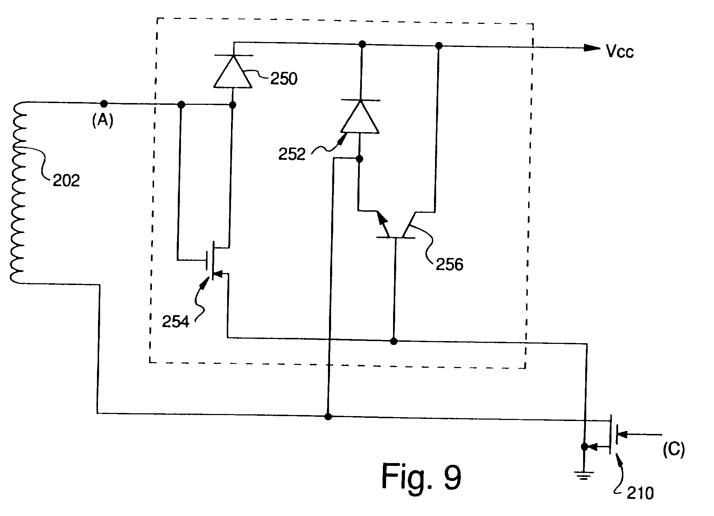

The transponder 30 is primarily comprised of two parts, a coil 202 and an integrated circuit containing the electronic components that make up the remainder of the transponder. When the transponder 30 is brought within range of the interrogator 14, a current is induced to flow through the turns of the coil 202, thereby creating an AC voltage across the turns of the coil. This AC voltage is then input to and rectified by the full-wave bridge rectifier 204, the operation of which will be further explained with reference to Fig. 9, to produce the positive DC voltage V_{cc} and the reference voltage Vₛₛ.

Node 206 denotes the reference point at the "clock side" of the bridge. This node also allows this same AC voltage to be split-off and used as an input to the clock recovery circuit 208. The other side of the bridge is referred to as the "FET side" because of the presence of the N-channel FET 210, the function of which will be further explained below. The clock recovery circuit 208 generates rectangular clock pulses from the sinusoidal waveform of the AC voltage input for driving the remainder of the circuit.

A frequency divider 212, comprised of a chain of toggle flip-flops configured as a ripple counter, divides the output of the recovery circuit by eight. Since the preferred carrier frequency of the transmitting field is 134 KHz, and the preferred subcarrier frequency is 67 KHz, as will be further explained below, dividing the clock pulses by 8 causes the memory array 214 and the logic network 216 to serially clock out a new data bit every 16 cycles of the carrier frequency. This in turn corresponds to a possible phase shift every 8 cycles of the 67 KHz subcarrier. Hence, the bit period of the subcarrier is eight 67 KHz cycles long, or 119 microseconds, which results in a data transmission rate of 8375 bits per second.

The memory array 214 contains 64 bits of data (although larger arrays are also possible) which are used to identify the particular transponder in which the memory array is installed. The data bits output by the 64 bit memory array 214 are fed to the logic network 216, which toggles the position of the phase select switch 218 in relation to the flip-flop 220 whenever a logic "0" is shifted out of the memory array 214. The flip-flop 220, driven by the clock pulses output by the clock recovery circuit 208, is used to phase modulate the data bits output by the logic network 216 at the subcarrier frequency of 67 KHz. When the phase select switch 218 is moved from Q to Q-bar by the logic network, one 67 KHz pulse is skipped, causing a 180 degree phase shift in the gate drive signal of the FET 210. Conversely, when the phase select switch 218 is moved from Q-bar to Q, a pulse is added to the gate drive signal in order to shift the phase of the subcarrier in the opposite direction.

The N-channel FET 210 is operative to periodically short out the "FET side" of the bridge in accordance with the phase of the 67 KHz gate drive signal in order to modulate the field surrounding the transponder coil 202 with the desired information. Adding a pulse to the gate drive signal would thereby cause the FET 210 to short out the bridge rectifier two 134 KHz cycles in a row. Because power to the transponder circuitry is obtained from the coil 202, and shorting out the bridge prevents the transponder from receiving power over the period of the short, allowing the FET 210 to short out the coil 202 for two cycles in a row would cause the transponder's power to drop below acceptable levels. To avoid shorting out the bridge for an extended period of time, a double pulse lockout circuit 222 is added to remove this extra pulse from the gate drive signal input to the FET 210. Hence, this extra pulse is swallowed by the pulse lockout circuit 222 and will not be present in the actual waveform input to the FET 210. Although pulse lockout circuits are used in many different types of technology, the use of such a circuit in the preferred embodiment is an important feature of the present invention because it allows a single coil to be used to both power the circuit and transmit its output, thereby eliminating the need for separate coils as taught by the prior art.

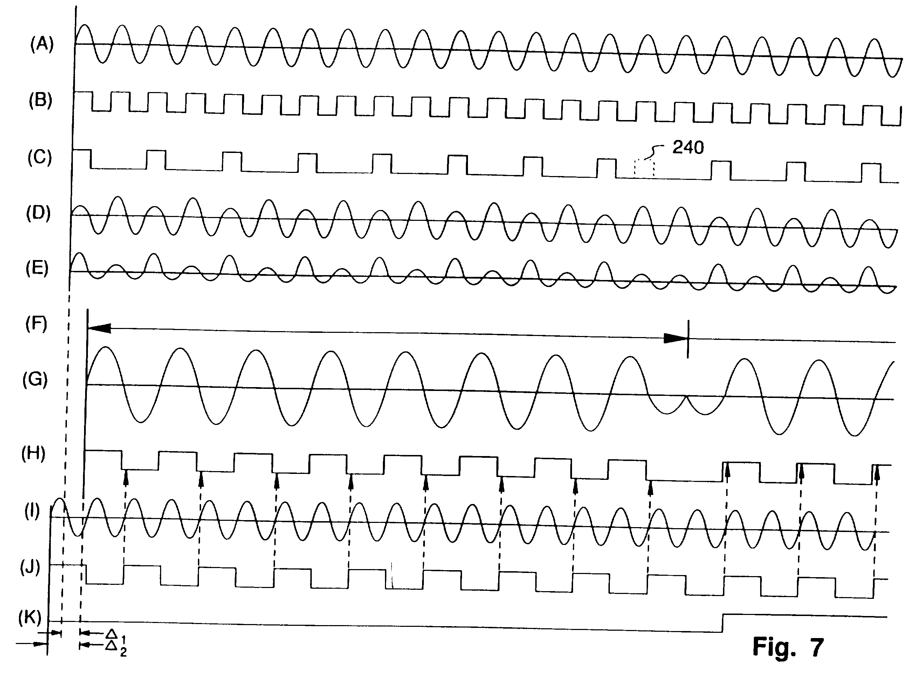

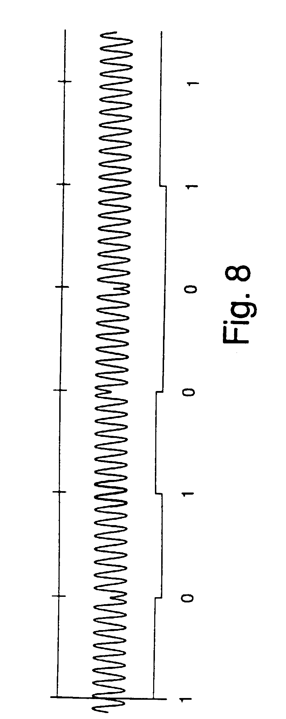

An additional distinguishing feature of the present invention is the manner in which the subcarrier signal is phase modulated by the digital data stored in the memory array 214. It is important to note that the phase of the 67 KHz subcarrier changes when a logic "0" is transmitted, but does not change when a logic "1" is transmitted. When a logic "0" is assigned to one phase and a logic "1" is assigned to the other phase, such as is taught by the prior art, a missing bit or phase change, i.e., resulting from a realignment in the orientation of the transponder and interrogator, can cause a misinterpretation of the data being transmitted. The phase modulation technique of the present invention prevents the erroneous interchange of logic "1's" and "0's" which can occur in prior art systems because the present invention only watches for changes in the absolute phase of the subcarrier and not the absolute phase as taught in the prior art. Hence, the absolute phase of the received signal can vary as the interrogator moves relative to the transponder and not effect the system's ability to accurately read the transponder's identification data. This modulation technique will be further explained below with reference to Figs. 7 and 8.

A further additional feature of the present invention relates to the frequency at which the subcarrier is modulated. As described with reference to the prior art, such devices typically modulate the subcarrier at one-tenth of the carrier frequency to make it easier for the interrogator to distinguish between the transmitted and received signals. Assuming the use of a 134 KHz carrier frequency in a prior art system, the main spectral components of that signal would appear at 13.4 Khz. Hence, the energy carrying lower and upper side bands of the carrier signal would be calculated as 120.6 KHz (134 - 13.4) and 147.4 KHz (134 + 13.4), respectively. Although modulating the subcarrier at this frequency simplifies receiver design by separating the subcarrier from the interfering exciter signal by a wider frequency spread, the energy dumped into both the 120.6 KHz and 147.4 KHz sidebands is now wasted energy because the receiver coil is not tuned to listen at these frequencies as well as the subcarrier frequency. In addition, a 13.4 KHz subcarrier signal cannot be modulated at the data rates available with higher frequency subcarriers. Since the data rate is an important factor in determining the code reading time, the data rate available is an important consideration, especially with respect to interrogating a moving transponder.

In the present invention, the subcarrier is modulated at one-half of the carrier frequency. The modulation of the coil current at 67 KHz produces three main spectral components, the subcarrier at 67 KHz and the upper and lower sidebands around the 134 KHz carrier signal. The upper sideband is at 201 KHz (134 + 67) and is wasted energy, but the lower sideband is at 67 KHz, which falls directly on top of the 67 KHz component of the coil current, thereby reinforcing and increasing the strength of the transmitted signal at 67 KHz. Since a stronger transponder signal directly relates to a greater reading distance, this increase in strength is extremely important. In addition, this subcarrier frequency allows for a high data transmission rate, thereby allowing the data to be read from the transponder numerous times before the transponder could possibly move a significant distance away from the interrogator.

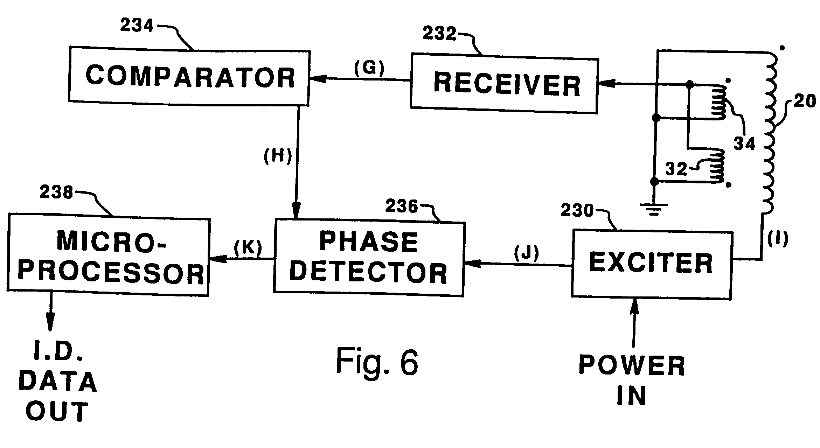

Fig. 6 schematically illustrates an interrogator/ receiver circuit in accordance with the preferred embodiment of the present invention. An exciter 230 drives the transmitting coil 20 with the 134 KHz carrier signal described above. The differential receiver coils 32 and 34 collect the modulated 67 KHz subcarrier signal emitted by the transponder 30 such that the large 134 KHz transmitting signal does not disturb the sensitivity of the receiver 232. The receiver circuit 232 is comprised of various stages, such as bandpass and notch filters, low-noise amplifiers and limiters, which operate to recover the phase modulated 67 KHz subcarrier collected by the receiver coils. The recovered signal is then applied to a comparator circuit 234 which "squares up" the sinusoidal receiver output by means of zero-crossing detection. This signal is then applied to the phase detector 236. The phase detector 236 is a flip-flop which receives a trigger from the exciter 230. Because the received signal from the comparator 234 is synchronous with, but not necessarily in phase with, the 134 KHz transmitting current, it is possible to easily trigger the phase detector so as to recover the changes in phase of the received signals. These phase changes are then logged by the microprocessor 238 which extracts the correct identification code of the transponder and outputs an identification data signal for storage or display as appropriate.

As stated above, the modulation technique and operation of the circuitry of the present invention can be better understood with reference to Figs. 7 and 8. Fig. 7 is a timing diagram illustrating the relationship between the modulation waveforms present at various locations in the transponder and those present at various locations in the interrogator/receiver. Traces (A) through (K) illustrate the transmission of one phase shift, or the encoding of a logic "0". The transmission of a logic "1" is not illustrated because a logic "1" is transmitted only when no phase shift occurs over two bit periods, hence, the same repetitious waveforms would be illustrated for two whole bit periods in order to illustrate the transmission of a logic "1".

Traces (A) through (E) illustrate the transponder's operation and are in-phase with respect to one another. Traces (F) through (H) illustrate the operation of the interrogator/receiver. Although traces (F) through (H) are in-phase with respect to one another, they will most likely not be in-phase with respect to traces (A) through (E) because the different orientations of the transponder and receiver coils change the relative phases of the two groups of signals. Likewise, traces (I) through (K), which illustrate the operation of the phase detector 236, are in-phase with respect to one another but have a shifting phase with respect to traces (F) through (H).

Trace (A) is the 134 KHz carrier signal which appears on the "clock side" of the bridge rectifier 204 as measured at node 206. Trace (B) is the recovered clock signal output by the clock pulse recovery circuit 208. Trace (C) is the gate drive signal output from the double pulse lockout 222. When this signal is high, normally every other clock pulse in accordance with the modulation of the 67 KHz subcarrier, the FET 210 shorts out the "FET side" of the rectifier bridge as described above. However, as will be recalled, certain phase changes can result in the addition of an extra high pulse in the gate drive signal, which can undesirably short out the coil 202 for two 134 KHz cycles in a row. Trace (C) shows how this additional pulse 240 (shown by the dotted lines) would appear in the gate drive signal if it were not for its removal by the double pulse lockout 222.

Trace (D) is the voltage signal which appears across the transponder coil 202. The chopped pulses of the sinusoid are a result of the FET 210 being turned on by the gate drive signal. When the gate drive signal skips a regular pulse, as a result of the phase select switch 218 and the pulse lockout 222, the trace (D) stays high two pulses in a row. Trace (E) is the current through the transponder coil 202. The larger current peaks are a result of the coil 202 being shorted by the FET 210, which corresponds to the variations in the voltage signal of trace (D).

Trace (F) is the bit period in relation to the signals received by the receiver coils 32 and 34 from the transponder 30. Trace (G) is the analog output of the receiver circuit 232. Trace (H) is the output of the comparator 234 after it has "squared up" the receiver output. Note that due to the difference in orientation of the receiver/interrogator and the transponder 30, the traces representing the signals within the receiver/interrogator are displaced by a distance Delta-one with respect to the phase of the traces representing the signals within the transponder 30.

Likewise, trace (I), which is the transmitter output of the exciter 230, has the same frequency as the signal represented by trace (A), but would not normally be in phase with trace (A) because of the difference in the orientation of the system. For example, as shown in Fig. 7, traces (I) through (K) are shown to be displaced from traces (F) through (H) by a distance Delta-two, wherein Delta-two is larger than Delta-one. Trace (J) is the synchronous output of the exciter 230 which is used to trigger the phase detector 236. As will be noted, the rising edge of the trace (J) corresponds with the zero-crossing of the trace (I) and clocks trace (H) into the phase detector 236. The rising edge of trace (J) is free to move in time anywhere along the line denoting the low pulse of the trace (H) and no phase change will occur until a desired phase change is instigated. After the desired phase change, the rising edge of trace (J) would be free to move in time anywhere along the line denoting the high pulse of the trace (H) without changing phase until the next phase change.

This mobility in phase alignment is a distinct advantage of the present invention because it allows for variations in the phase relationship between the sync pulse and the comparator output without resulting in an undesired phase change. Although a phase change may occur in some situations, since the microprocessor 238 is designed to only look for phase changes at specific times, such a change would generally not result in a misreading of the transponder's identification code. In addition, even if the phase change impacted the proper reading of the transponder's identification code, the data rate and bandwidth efficiency of the system are such that sufficient readings could be taken by the system before the transponder had a chance to move out of range. Finally, trace (K), which is the output of the phase detector flip-flop, indicates the absolute phase of the incoming 67 KHz subcarrier signal. The microprocessor examines this phase signal and assigns a zero to the decoded data output whenever the phase changes in a bit period.

Fig. 8 illustrates a timing diagram for a typical bit sequence of a bit stream modulated in accordance with the above description, and in particular, to the description of Fig. 7. As shown the initial bit period is high, but the second bit period switches to low at the first phase change. Because the phase does not change at the start of the third bit period, the third bit period is high. A new phase change causes the fourth bit period to go low and a subsequent phase change causes the fifth bit period to stay low. Hence, it can be seen that through the bit stream "1 0 1 0 0 1 1", a change in phase of the signal at the fall of the eighth cycle always results in a logic "0" while no change results in a logic "1".

With reference now to Fig. 9, the full-wave bridge rectifier 204 is shown in greater detail. The positive swings of the AC voltage input to the rectifier 204 from the coil 202 is clamped by the diodes 250 and 252 to V_{cc}. The P-channel FET 254 clamps the negative swings of one side of the coil 202 to the threshold voltage of the P-channel FET 254 (about -1.0 volts), while the parasitic transistor 256, which is formed by the inherent construction technique of the integrated circuit, clamps the other side of the coil 202 to -V_{be} (about -0.6 volts) on its negative swings. In this manner, the AC coil voltage is full-wave rectified and the resulting DC voltage is applied to the integrated circuit as V_{cc}.

It should be noted that since the distance between the transponder and the transmitting coil is not fixed, wide variations in the induced AC coil voltage are likely to occur. However, the bridge circuit 204 can reduce the variance which would otherwise appear in V_{cc} with each change in the AC coil voltage. At large distances, transistor 256 merely acts as a diode to rectify the AC coil voltage, but as the transponder is moved closer to the transmitting coil and V_{cc} would otherwise increase, transistor 256 turns on harder and draws substantial collector current, thereby reducing V_{cc} by shunting the current to ground. It should also be noted that it is an advantage of the preferred embodiment of the present invention that with respect to the transistor 256, the use of a parasitic transistor, or any transistor for that matter, as a V_{cc} shunt regulator allows the transponder to be placed right on top of the exciter coil without suffering malfunction or damage in the transponder's circuitry as a result of a large increase in operating power.

Although the present invention has been described in terms of specific embodiments, it is anticipated that alterations and modifications thereof will no doubt become apparent to those skilled in the art. It is therefore intended that the following claims be interpreted as covering all such alterations and modification as fall within the scope of the appended claims.

## Claims

1. An inductively coupled information retrieval system, comprising:
interrogator means (14) for transmitting an electromagnetic field (26, 28), receiving a phase modulated subcarrier signal, and analyzing said phase modulated subcarrier signal to detect information conveyed thereby, said interrogator means (14) including:
a support means;
means (18, 230) for generating a first power signal for use in generating said field;
a transmitter coil (20) affixed to said support means for receiving said first power signal and transmitting said field (26, 28), said transmitter coil (20) being adapted to generate a magnetic flux field (26, 28),
receiver coil means (32, 34; 132, 134) for receiving said phase modulated subcarrier signal; and
processing means (232, 234, 236, 238, 19) operative to analyze and display said information;
a transponder (16, 30), including
a transponder coil (202) operative to receive said flux field (26, 28) and convert electromagnetic energy contained therein into an AC power signal, said transponder coil (202) also being operative to receive a phase modulated power signal and modulate said field (26, 28) with said phase modulated subcarrier signal; and
a transponder circuit assembly (204 - 222) encoded with said information and in communication with said transponder coil (202) for receiving said AC power signal and outputting said information;
characterized by
said transmitter coil (20) including one or more conductive windings (24) circumscribing a substantially polygonal volume of space having a central axis, said transmitter coil (20) being adapted to generate said magnetic flux field (26, 28) within said volume;
said receiver coil means being formed by first and second receiver coils (32, 34; 132, 134) disposed within said volume of space at significantly separated points and adapted to have linking relationships with portions of said flux field (26, 28; 126, 128), said first and second receiver coils (32, 34; 132, 134) being electrically connected to each other in a differential circuit relationship such that the magnitude of electrical signals induced in said first and second receiver coils (32, 34; 132, 134) by electromagnetic energy transmitted by said transmitter coil (20) are substantially equal and opposite to each other, said first and second receiver coils (32, 34; 132, 134) being further disposed such that electromagnetic energy generated by said phase modulated subcarrier signal and passing through at least one of said first and second receiver coils (32, 34; 132, 134) will induce an electric signal of greater magnitude in one receiver coil (32, 34; 132, 134) than will be induced in the other receiver coil (32, 34; 132, 134) and cause a current to flow in said differential circuit which corresponds to the amount of energy generated and the information conveyed by said subcarrier signal;
said processing means (232, 234, 236, 238, 19) being responsive to said current flowing in said differential circuit; and
said transponder circuit assembly (204 - 222) causing periodic electrical shorting of said transponder coil (202) the change of phase of which results in a shift in the phase of said subcarrier signal, said phase modulated subcarrier signal being modulated to change phase when a logic "0" data bit representing some of said information is to be transmitted and to not change phase when a logic "1" data bit representing some of said information is to be transmitted, whereby said interrogator means (14) need only analyze absolute changes in the phase of said subcarrier signal in order to correctly determine the logic of the data bits being transmitted and to detect said information.

2. The inductive coupled information retrieval system of claim 1, characterized in that said transponder circuit assembly (204 - 222) includes:
means (204, 208, 212) for converting said AC power signal into a plurality of control signals for operating said circuit assembly (204 - 222); and
coded signal retrieval means (214 - 222) for receiving said control signals and outputting said information.

3. The inductively coupled information retrieval system of claim 2, characterized in that said converting means (204, 208, 212) includes:
rectifier means (204) for receiving said AC power signal and producing a DC power signal for operating said retrieval means (214 - 222); and
timing means (208, 212) for receiving said AC power signal and producing a clock pulse signal for driving said retrieval means (214 - 222).

4. The inductively coupled information retrieval system of claim 3, characterized in that said rectifier means (204) includes a shunt regulator (256) for shunting excess current produced by said rectifier (204) to ground when said transponder coil (202) receives an excessive AC power signal, whereby the voltage level of said DC power signal is maintained within an operating range of said retrieval means (214 - 222).

5. The inductively coupled information retrieval system of claim 3 or claim 4, characterized in that said rectifier means (204) is a full-wave bridge rectifier (204).

6. The inductively coupled information retrieval system of claim 4 or claim 5, characterized in that said shunt regulator (256) is a parasitic transistor (256).

7. The inductively coupled information retrieval system of any of claims 2 to 6, characterized in that said retrieval means (208 - 222) includes:
timing means (208) for receiving said AC power signal and creating a clock pulse signal;
memory retrieval means (212, 214) for receiving said clock pulse signal and outputting an identity code signal containing said information;
and further wherein digital control means (216, 218, 220) includes:
logic means (216) for receiving said identity code signal and outputting a digital data signal representing said identity code signal;
phase modulating means (218, 220) for receiving said clock pulse signal and said digital data signal and for generating a phase modulated drive signal, the phase of said drive signal being changed when a logic "0" data bit from said digital data signal is to be transmitted and being not changed when a logic "1" data bit from said digital data signal is to be transmitted; and
driving means (210) for receiving said phase modulated drive signal and outputting said phase modulated subcarrier signal, whereby said transponder coil (202) is caused to transmit said subcarrier signal within said field (26, 28) at the frequency of said first power signal.

8. The inductively coupled information retrieval system of claim 7, characterized in that said phase modulating means (218, 222) includes:
phase selection means (218) for receiving said drive signal and said digital data signal and for phase modulating said drive signal with said digital data signal by causing said drive signal to skip one cyclic clock pulse to change the phase of said drive signal and by causing said drive signal to add one cyclic clock pulse when the phase of said drive signal is reversed; and
double pulse lockout means (222) for removing the positive voltage component from each cyclic clock pulse added to said drive signal and outputting said modulated drive signal, whereby two consecutive cyclic clock pulses will not be received by said driving means.

9. A method of generating an electromagnetic identifying signal in response to receipt of a transmitted electromagnetic interrogating signal alternating at a first frequency, comprising:
converting (204, 208, 220) the received interrogating signal into a power signal, a clock signal and a modulating signal including a series of pulses occurring at a second frequency;
using said clock signal to retrieve (212, 214) at a predetermined bit rate a stored (214) identifying digitally coded signal comprised of a string of "1" bits of a first logic state and "0" bits of a second logic state;
phase-shifting said modulating signal with the retrieved digitally coded signal; and
retransmitting the electromagnetic identifying signal in the form of a a phase modulated subcarrier signal,
characterized by
using said digitally coded signal to shift (216 - 222) the phase of a block of said modulating signal pulses when the state of a particular bit of said coded signal is of said first state, and to not shift the phase of a like block of said modulating signal pulses when the state of a bit is of said second state; and
using the phase-shifted modulating signal to amplitude-modulate (210) said interrogating signal and to cause the resulting electromagnetic identifying signal to be retransmitted in the form of a subcarrier signal the phase of which is shifted by 180° when a "1" bit is retransmitted and is not shifted when a "0" bit is retransmitted.

10. The method of claim 9, characterized in that said first frequency is 134 kHz and said second frequency is 67 kHz.

11. The method of claim 10, characterized in that said predetermined bit rate is 8.375 kHz.

12. A transponder (30) for generating an electromagnetic identifying signal in response to receipt of a transmitted electromagnetic interrogating signal alternating at a first frequency, comprising:
first means (202, 204, 208, 212) for receiving and converting the received interrogating signal into a power signal, a clock signal, and a modulating signal including a series of pulses occurring at a second frequency;
data storage means (214) for storing an identifying, digitally coded signal comprised of a string of "1" bits of a first logic state and "0" bits of a second logic state;
second means (216) responsive to said power signal and said clock signal and operative to retrieve the stored digitally coded signal from said storage means (214) and to output same at a predetermined bit rate;
third means (218, 220) for phase shifting said modulating signal with the retrieved digitally coded signal; and
fourth means (210) for using said phase shifted modulating signal to modulate said interrogating signal and to retransmit said electromagnetic identifying signal in the form of a subcarrier signal,
characterized by
said second frequency being equal to one half of said first frequency;
said third means (218, 220) being responsive to the retrieved digitally coded signal and operative to shift the phase of a block of said modulating signal pulses when the state of a particular bit of said coded signal is of said first state, and to not shift the phase of a like block of said modulating signal pulses when the state of another bit of said coded signal is of said second state; and
said fourth means (210) being responsive to the shifted and unshifted blocks of modulating signal pulses and operative to cause said first means (204) to amplitude modulate the received interrogating signal and cause an electromagnetic identifying signal to be retransmitted in the form of a subcarrier signal at said second frequency the phase of which is shifted by 180° when a "1" bit is being retransmitted and the phase of which is not shifted when a "0" bit is being retransmitted.

13. The transponder (30) of claim 12, characterized in that said first means (202, 204, 208, 212) includes:
coil means (202) for receiving electromagnetic energy containing said interrogating signal and for developing electromagnetic energy containing said identifying signal;
rectifier means (204) coupled to said coil means (202) for converting energy contained in said interrogating signal into said power signal; and
clock recovery means (208, 212) coupled to said coil means (202) and operative to convert energy contained in said interrogating signal into said clock signal, the frequency of said clock signal being f/n, where f is the frequency of said interrogating signal and n is an integer greater than 2.

14. The transponder (30) of claim 13, characterized in that said rectifier means (204) includes a shunt regulator (256) for shunting excess current produced by said rectifier (204) to circuit ground when the amplitude of said interrogating signal exceeds a predetermined limit whereby the voltage level of said power signal is maintained within a predetermined operating range.

15. The transponder (30) of claim 14, characterized in that said shunt regulator (256) is formed by a parasitic transistor (256).

16. The transponder (30) of claim 13, characterized in that said rectifier means (204) is formed by three junction diodes (250, 252, 256) and a P-channel FET (254).

17. The transponder (30) of claim 16, characterized in that said shunt regulator (204) is formed by a parasitic transistor (256) associated with one of said junction diodes (250, 252, 256).

18. The transponder (30) of claim 12, characterized in that said fourth means (210) includes a modulating switch (210) responsive to the shifted and unshifted modulating signal pulses and operative to short said coil means (202) for the duration of each said pulse.

19. The transponder (30) of claim 18, characterized in that it comprises double pulse lock-out means (222) located in the signal path between said third means (218, 220) and said modulating switch (210), said lock-out means (222) being responsive to said clock signal and said digitally coded signal and operative to prevent said modulating switch (210) from being actuated during two successsive pulses of said clock signal.

20. The transponder (30) of claims 16 and 19, characterized in that said modulating switch (210) is an N-channel FET (210) coupled across one (256) of said junction diodes (250, 252, 256).

## Patentansprüche

1. Induktiv gekoppeltes System zur Wiedergewinnung von Information, mit:
Abfragemitteln (14) zum Senden eines elektromagnetischen Feldes (26, 28), zum Empfangen eines phasenmodulierten Hilfsträgersignals und zum Analysieren des phasenmodulierten Hilfsträgersignals, um Information zu erfassen, die hierdurch übermittelt wird, wobei die Abfragemittel (14) aufweisen:
Trägermittel;
Mittel (18, 230) zum Erzeugen eines ersten Leistungssignals zur Verwendung beim Erzeugen des Feldes;
eine Sendespule (20), die an den Trägermitteln festgelegt ist, um das erste Leistungssignal zu empfangen und das Feld (26, 28) zu senden, wobei die Sendespule (20) dazu ausgelegt ist, ein magnetisches Flußfeld (26, 28) zu erzeugen;
Empfangsspulenmittel (32, 34; 132, 134) zum Empfangen des phasenmodulierten Hilfsträgersignals; und
Verarbeitungsmittel (232, 234, 236, 238, 19), die betriebsbereit sind, um die Information zu analysieren und anzuzeigen;
einem Transponder (16, 30), der aufweist:
eine Transponderspule (202), die betriebsbereit ist, um das Flußfeld (26, 28) zu empfangen und die darin enthaltene elektromagnetische Energie in ein Wechselstrom-Leistungssignal umzuwandeln, wobei die Transponderspule (202) gleichfalls betriebsbereit ist, um ein phasenmoduliertes Leistungssignal zu empfangen und das Feld (26, 28) mit dem phasenmodulierten Hilfsträgersignal zu modulieren; und
eine Transponderschaltungsanordnung (204-222), die mit der Information codiert ist und in Kommunikation steht mit der Transponderspule (202), zum Empfangen des Wechselstrom-Leistungssignals und zum Ausgeben der Information;
dadurch gekennzeichnet, daß
die Sendespule (20) eine oder mehrere leitende Windungen bzw. Wicklungen (24) aufweist, die ein im wesentlichen polygonales Raumvolumen umschreiben bzw. definieren, das eine zentrale Achse besitzt, wobei die Sendespule (20) dazu ausgelegt ist, das magnetische Flußfeld (26, 28) innerhalb des Volumens zu erzeugen;
die Empfängerspulenmittel durch eine erste und eine zweite Empfängerspule (32, 34; 132, 134) gebildet sind, die innerhalb des Raumvolumens an beträchtlich voneinander entfernten Punkten angeordnet und dazu ausgelegt sind, verknüpfende Beziehungen mit Abschnitten des Flußfeldes (26, 28; 126, 128) zu besitzen, wobei die erste und die zweite Empfängerspule (32, 34; 132, 134) elektrisch miteinander nach Art einer Differenzschaltung verbunden sind, so daß die Amplituden der elektrischen Signale, die mittels der von der Sendespule (20) gesendeten elektromagnetischen Energie in die erste und die zweite Empfängerspule (32, 34; 132, 134) induziert werden, im wesentlichen gleich groß und gegenüberliegend bzw. gegenphasig zueinander sind, wobei die erste und die zweite Empfängerspule (32, 34; 132, 134) ferner derart angeordnet sind, daß elektromagnetische Energie, die von dem phasenmodulierten Hilfsträgersignal erzeugt ist und durch wenigstens eine von erster und zweiter Empfängerspule (32, 34; 132, 134) geht, ein elektrisches Signal einer größeren Amplitude in einer Empfängerspule (32, 34; 132, 134) induziert als in die andere Empfängerspule (32, 34; 132, 134) induziert wird und hervorruft, daß ein Strom in der Differenzschaltung fließt, der dem Maß der erzeugten Energie und der von dem Hilfsträgersignal übermittelten Information entspricht;
die Verarbeitungsmittel (232, 234, 236, 238, 19) auf den in der Differenzschaltung fließenden Strom ansprechen; und
die Transponderschaltungsanordnung (204-222) ein periodisches elektrisches Kurzschließen der Transponderspule (202) hervorruft, wobei eine Phasenänderung hiervon zu einer Verschiebung der Phase des Hilfsträgersignals führt, wobei das phasenmodulierte Hilfsträgersignal so moduliert wird, daß die Phase verändert wird, wenn ein Datenbit einer logischen "0", das einen Teil der Information darstellt, zu senden ist, und die Phase nicht verändert wird, wenn ein Datenbit einer logischen "1", das einen Teil der Information darstellt, zu senden ist, wobei die Abfragemittel (14) nur absolute Veränderungen der Phase des Hilfsträgersignals zu analysieren haben, um die Logik der gesendeten Datenbits korrekt zu bestimmen und die Information zu erfassen.

2. Induktiv gekoppeltes Informations-Wiedergewinnungssystem nach Anspruch 1, dadurch gekennzeichnet, daß die Transponderschaltungsanordnung (204-222) aufweist:
Mittel (204, 208, 212) zum Umwandeln des WechselstromLeistungssignals in eine Vielzahl von Steuersignalen zum Betreiben der Schaltungsanordnung (204-222); und
Wiedergewinnungsmittel (214-222) für ein codiertes Signal, zum Empfangen der Steuersignale und zum Ausgeben der Information.

3. Induktiv gekoppeltes Informations-Wiedergewinnungssystem nach Anspruch 2, dadurch gekennzeichnet, daß die Umwandlungsmittel (204, 208, 212) aufweisen:
Gleichrichtungsmittel (204) zum Empfangen des Wechsel-strom-Leistungssignals und zum Erzeugen eines Gleichstrom-Leistungssignals zum Betreiben der Wiedergewinnungsmittel (214-222); und
Zeitgabemittel (208, 212) zum Empfangen des WechselstromLeistungssignals und zum Erzeugen eines Takt-Impulssignals zum Ansteuern der Wiedergewinnungsmittel (214-222).

4. Induktiv gekoppeltes Informations-Wiedergewinnungssystem nach Anspruch 3, dadurch gekennzeichnet, daß die Gleichrichtungsmittel (204) einen Nebenschlußregler (256) aufweist zum Ableiten von überschüssigem Strom, der von dem Gleichrichter (204) erzeugt wird, im Nebenschluß zur Masse hin, wenn die Transponderspule (202) ein übermäßiges Wechselstrom-Leistungssignal empfängt, wodurch der Spannungspegel des Gleichstrom-Leistungssignals innerhalb eines Betriebsbereiches der Wiedergewinnungsmittel (214-222) beibehalten wird.

5. Induktiv gekoppeltes Informations-Wiedergewinnungssystem nach Anspruch 3 oder Anspruch 4, dadurch gekennzeichnet, daß die Gleichrichtungsmittel (204) ein Vollweg-Brückengleichrichter (204) sind.

6. Induktiv gekoppeltes Informations-Wiedergewinnungssystem nach Anspruch 4 oder Anspruch 5, dadurch gekennzeichnet, daß der Nebenschlußregler (256) ein parasitärer Transistor (256) ist.

7. Induktiv gekoppeltes Informations-Wiedergewinnungssystem nach einem der Ansprüche 2 bis 6, dadurch gekennzeichnet, daß die Wiedergewinnungsmittel (208-222) aufweisen:
Zeitgabemittel (208) zum Empfangen des Wechselstrom-Leistungssignals und zum Erzeugen eines Taktimpulssignals;
Speicher-Wiedergewinnungsmittel (212, 214) zum Empfangen des Taktimpulssignals und zum Ausgeben eines Identitätscodesignals, das die Information enthält;
und wobei weiterhin digitale Steuermittel (216, 218, 220) aufweisen:
Logikmittel (216) zum Empfangen des Identitätscodesignals und zum Ausgeben eines digitalen Datensignals, das das Identitätscodesignal darstellt;
Phasenmodulationsmittel (218, 220) zum Empfangen des Takt-impulssignals und des digitalen Datensignals und zum Erzeugen eines phasenmodulierten Ansteuersignals, wobei die Phase des Ansteuersignals verändert wird, wenn ein Datenbit einer logischen "0" des digitalen Datensignals zu senden ist, und nicht verändert wird, wenn ein Datenbit einer logischen "1" des digitalen Datensignals zu senden ist; und
Ansteuermittel (210) zum Empfangen des phasenmodulierten Ansteuersignals und zum Ausgeben des phasenmodulierten Hilfsträgersignals, wodurch die Transponderspule (202) veranlaßt wird, das Hilfsträgersignal innerhalb des Feldes (26, 28) mit der Frequenz des ersten Leistungssignals zu senden.

8. Induktiv gekoppeltes Informations-Wiedergewinnungssystem nach Anspruch 7, dadurch gekennzeichnet, daß die Phasenmodulationsmittel (218, 222) aufweisen:
Phasenselektionsmittel (218) zum Empfangen des Ansteuersignals und des digitalen Datensignals und zum Phasenmodulieren des Ansteuersignals mit dem digitalen Datensignal, indem veranlaßt wird, daß das Ansteuersignal einen zyklischen Taktimpuls überspringt bzw. ausläßt, um die Phase des Ansteuersignals zu verändern, und indem veranlaßt wird, daß das Ansteuersignal einen zyklischen Taktimpuls hinzubekommt bzw. hinzuaddiert, wenn die Phase des Ansteuersignals umgekehrt wird; und
Doppelimpuls-Sperrmittel (222) zum Entfernen der positiven Spannungskomponente von jedem zyklischen Taktimpuls, der dem Ansteuersignal hinzuaddiert ist, und zum Ausgeben des modulierten Ansteuersignals, wodurch von den Ansteuermitteln nicht zwei aufeinanderfolgende zyklische Taktimpulse empfangen werden.

9. Verfahren zum Erzeugen eines elektromagnetischen Identifikationssignals in Antwort auf den Empfang eines gesendeten elektromagnetischen Abfragesignals, das mit einer ersten Frequenz alterniert bzw. schwingt, mit den Schritten:
Umwandeln (204, 208, 220) des empfangenen Abfragesignals in ein Leistungssignal, ein Taktsignal und ein modulierendes Signal einschließlich einer Reihe von Impulsen, die mit einer zweiten Frequenz auftreten;
Verwenden des Taktsignals zum Wiedergewinnen (212, 214) eines gespeicherten (214) digital codierten Identifikationssignals mit einer vorbestimmten Bitrate, wobei das Signal aus einem String aus "1"-Bits eines ersten logischen Zustands und aus "0"-Bits eines zweiten logischen Zustands besteht;
Phasenverschieben des modulierenden Signals mit dem wiedergewonnenen digital codierten Signals; und
Zurücksenden des elektromagnetischen Identifikationssignals in Form eines phasenmodulierten Hilfsträgersignals;
gekennzeichnet durch
Verwenden des digital codierten Signals zum Verschieben (216-222) der Phase eines Blocks der modulierenden Signalimpulse, wenn der Zustand eines bestimmten Bits des codierten Signals der erste Zustand ist, und dazu, die Phase eines gleichen Blocks der modulierenden Signalimpulse nicht zu verschieben, wenn der Zustand eines Bits der zweite Zustand ist; und
Verwenden des phasenverschobenen modulierenden Signals zum Amplitudenmodulieren (210) des Abfragesignals und zum Veranlassen, daß das sich ergebende elektromagnetische Identifikationssignal in der Form eines Hilfsträgersignals zurückgesendet wird, dessen Phase um 180° verschoben ist, wenn ein "1"-Bit zurückgesendet wird, und nicht phasenverschoben ist, wenn ein "0"-Bit zurückgesendet wird.

10. Verfahren nach Anspruch 9, dadurch gekennzeichnet, daß die erste Frequenz 134 kHz beträgt und die zweite Frequenz 67 kHz.

11. Verfahren nach Anspruch 10, dadurch gekennzeichnet, daß die vorbestimmte Bitrate 8,375 kHz beträgt.

12. Transponder (30) zum Erzeugen eines elektromagnetischen Identifikationssignals in Antwort auf den Empfang eines gesendeten elektromagnetischen Abfragesignals, das mit einer ersten Frequenz alterniert bzw. schwingt, mit:
ersten Mitteln (202, 204, 208, 212) zum Empfangen des Abfragesignals und zum Umwandeln des empfangenen Abfragesignals in ein Leistungssignal, ein Taktsignal und ein modulierendes Signal einschließlich einer Reihe von Impulsen, die mit einer zweiten Frequenz auftreten;
Datenspeichermitteln (214) zum Speichern eines digital codierten Identifikationssignals, das aus einem String von "1"-Bits eines ersten logischen Zustands und "0"-Bits eines zweiten logischen Zustands besteht;
zweiten Mitteln (216), die auf das Leistungssignal und das Taktsignal ansprechen und betriebsbereit sind, um das gespeicherte digital codierte Signal aus den Speichermitteln (214) wiederzugewinnen und dasselbe mit einer vorbestimmten Bitrate auszugeben;
dritten Mitteln (218, 220) zum Phasenverschieben des modulierenden Signals mit dem wiedergewonnenen digital codierten Signal; und
vierten Mitteln (210) zum verwenden des phasenverschobenen modulierten Signals dazu, das Abfragesignal zu modulieren und das elektromagnetische Identifikationssignal in der Form eines Hilfsträgersignals zurückzusenden;
dadurch gekennzeichnet, daß
die zweite Frequenz halb so groß ist wie die erste Frequenz;
die dritten Mittel (218, 220) auf das wiedergewonnene digital codierte Signal ansprechen und betriebsbereit sind, um die Phase eines Blocks der modulierenden Signalimpulse zu verschieben, wenn der Zustand eines bestimmten Bits des codierten Signals der erste Zustand ist, und die Phase eines gleichen Blocks der modulierenden Signalimpulse nicht zu verschieben, wenn der Zustand eines anderen Bits des codierten Signals der zweite Zustand ist; und
die vierten Mittel (210) auf die verschobenen und nicht verschobenen Blöcke von modulierenden Signalimpulsen ansprechen und betriebsbereit sind, zu veranlassen, daß die ersten Mittel (204) das empfangene Abfragesignal amplitudenmodulieren, und um zu veranlassen, daß ein elektromagnetisches Identifikationssignal in der Form eines Hilfsträgersignals mit der zweiten Frequenz zurückgesendet wird, wobei die Phase hiervon um 180° verschoben ist, wenn ein "1"-Bit zurückzusenden ist, und wobei die Phase hiervon nicht verschoben ist, wenn ein "0"-Bit zurückzusenden ist.

13. Transponder (30) nach Anspruch 12, dadurch gekennzeichnet, daß die ersten Mittel (202, 204, 208, 212) aufweisen:
Spulenmittel (202) zum Empfangen von elektromagnetischer Energie, die das Abfragesignal enthält, und zum Aufbauen von elektromagnetischer Energie, die das Identifikationssignal enthält;
Gleichrichtermittel (204), die mit den Spulenmitteln (202) gekoppelt sind, um die in dem Abfragesignal enthaltene Energie in das Leistungssignal umzuwandeln; und
Taktwiederherstellungsmittel (208, 212), die mit den Spulenmitteln (202) gekoppelt sind und betriebsbereit sind, um in dem Abfragesignal enthaltene Energie in das Taktsignal umzuwandeln, wobei die Frequenz des Taktsignals f/n ist, wobei f die Frequenz des Abfragesignals ist und wobei n eine ganze Zahl größer als 2 ist.

14. Transponder (30) nach Anspruch 13, dadurch gekennzeichnet, daß die Gleichrichtermittel (204) einen Nebenschlußregler (256) aufweisen zum Ableiten von überschüssigem Strom, der von dem Gleichrichter (204) für die Schaltung erzeugt wird, im Nebenschluß zur Masse, wenn die Amplitude des Abfragesignals eine vorbestimmte Grenze überschreitet, wodurch der Spannungspegel des Leistungssignals innerhalb eines vorbestimmten Betriebsbereiches beibehalten wird.

15. Transponder (30) nach Anspruch 14, dadurch gekennzeichnet, daß der Nebenschlußregler (256) ein parasitärer Transistor (256) ist.

16. Transponder (30) nach Anspruch 13, dadurch gekennzeichnet, daß die Gleichrichtermittel (204) gebildet sind durch drei Sperrschichtdioden (250, 252, 256) und durch einen P-Kanal-FET (254).

17. Transponder (30) nach Anspruch 16, dadurch gekennzeichnet, daß der Nebenschlußregler (204) gebildet ist durch einen parasitären Transistor (256), der einer der Sperrschichtdioden (250, 252, 256) zugeordnet ist.

18. Transponder (30) nach Anspruch 12, dadurch gekennzeichnet, daß die vierten Mittel (210) einen modulierenden Schalter (210) aufweisen, der auf die verschobenen und die nicht verschobenen modulierenden Signalimpulse anspricht und betriebsbereit ist, die Spulenmittel (202) für die Dauer jedes Impulses kurzzuschließen.

19. Transponder (30) nach Anspruch 18, dadurch gekennzeichnet, daß der Transponder Doppelimpuls-Sperrmittel (222) aufweist, die in dem Signalpfad zwischen den dritten Mitteln (218, 220) und dem modulierenden Schalter (210) angeordnet sind, wobei die Sperrmittel (222) auf das Taktsignal und das digital codierte Signal ansprechen und betriebsbereit sind, um zu verhindern, daß der modulierende Schalter (210) während zweier aufeinanderfolgender Impulse des Taktsignals betätigt wird.

20. Transponder (30) nach Anspruch 16 und Anspruch 19, dadurch gekennzeichnet, daß der modulierende Schalter (210) ein N-Kanal-FET (210) ist, der über einer (256) der Sperrschichtdioden (250, 252, 256) angeschlossen ist.

## Revendications

1. Système de récupération d'information à couplage inductif, comprenant :
des moyens interrogateurs (14) pour transmettre un champ électromagnétique (26, 28), recevoir un signal de sous-porteuse modulé en phase, et analyser ledit signal de sous-porteuse modulé en phase pour détecter une information transportée par celui-ci, lesdits moyens interrogateurs (14) comprenant :
des moyens formant support,
des moyens (18, 230) pour générer un premier signal de puissance en vue de son utilisation pour générer ledit champ ;
une bobine de transmission (20) fixée auxdits moyens formant support pour recevoir ledit premier signal de puissance et transmettre ledit champ (26, 28), ladite bobine de transmission (20) étant adaptée pour générer un champ de flux magnétique (26, 28),
des moyens formant bobine réceptrice (32, 34 ; 132, 134) pour recevoir ledit signal de sous-porteuse modulé en phase ; et
des moyens de traitement (232, 234, 236, 238, 19) agissant pour analyser et afficher ladite information ;
un transpondeur (16, 30) comprenant :
une bobine de transpondeur (202) agissant pour recevoir ledit champ de flux (26, 28) et convertir l'énergie électromagnétique contenue dans celui-ci en un signal électrique alternatif, ladite bobine de transpondeur (202) agissant également pour recevoir un signal de puissance modulé en phase et moduler ledit champ (26, 28) avec ledit signal de sous-porteuse modulé en phase ; et
un ensemble à circuit transpondeur (204 - 222) codé avec ladite information et en communication avec ladite bobine de transpondeur (202) pour recevoir ledit signal électrique alternatif et délivrer ladite information ;
caractérisé en ce que
ladite bobine de transmission (20) comprend un ou plusieurs enroulements conducteurs (24) circonscrivant un volume d'espace sensiblement polygonal ayant un axe central, ladite bobine de transmission (20) étant adaptée pour générer ledit champ de flux magnétique (26, 28) dans ledit volume ;
lesdits moyens formant bobine réceptrice sont formés par des première et deuxième bobines réceptrices (32, 34 ; 132, 134) placées dans ledit volume d'espace en des points nettement espacés et adaptées pour avoir des liaisons de couplage avec des parties dudit champ de flux (26, 28 ; 126, 128), lesdites première et deuxième bobines réceptrices (32, 34 ; 132, 134) étant connectées électriquement l'une à l'autre selon une relation de circuit différentiel en sorte que les amplitudes des signaux électriques induits dans lesdites première et deuxième bobines réceptrices (32, 34 ; 132, 134) par l'énergie électromagnétique transmise par ladite bobine de transmission (20) sont sensiblement égales et opposées l'une à l'autre, lesdites première et deuxième bobines réceptrices (32, 34 ; 132, 134) étant de plus placées en sorte que l'énergie électromagnétique générée par ledit signal de sous-porteuse modulé en phase et passant à travers au moins l'une desdites première et deuxième bobines réceptrices (32, 34 ; 132, 134) induira un signal électrique de plus grande amplitude dans une bobine réceptrice (32, 34 ; 132, 134) que celui qui sera induit dans l'autre bobine réceptrice (32, 34 ; 132, 134) et provoquera le passage d'un courant dans ledit circuit différentiel, qui correspond à la quantité d'énergie générée et à l'information transportée par ledit signal de sous-porteuse ;
lesdits moyens de traitement (232, 234, 236, 238, 19) réagissent au passage dudit courant dans ledit circuit différentiel ; et
ledit ensemble formant circuit transpondeur (204-222) provoque un court-circuitage électrique périodique de ladite bobine de transmission (202), dont la variation de phase provoque un décalage dans la phase dudit signal de sous-porteuse, ledit signal de sous-porteuse modulé en phase étant modulé pour changer de phase lorsqu'un bit de données de niveau logique "0" représentant une partie de ladite information doit être transmis, et pour ne pas changer de phase lorsqu'un bit de données de niveau logique "1" représentant une partie de ladite information doit être transmis, de sorte que lesdits moyens interrogateurs (14) n'ont qu'à analyser des variations absolues de la phase dudit signal de sous-porteuse pour déterminer correctement l'état logique des bits de données transmis et détecter ladite information.

2. Système de récupération d'information à couplage inductif selon la revendication 1, caractérisé en ce que ledit ensemble formant circuit transpondeur (204 - 222) comprend :
des moyens (204, 208, 212) pour convertir ledit signal électrique alternatif en une pluralité de signaux de commande pour actionner ledit ensemble formant circuit (204 - 222) ; et
des moyens de récupération de signal codé (214 - 222) pour recevoir lesdits signaux de commande et délivrer ladite information.

3. Système de récupération d'information à couplage inductif selon la revendication 2, caractérisé en ce que lesdits moyens de conversion (204, 208, 212) comprennent :
des moyens redresseurs (204) pour recevoir ledit signal électrique alternatif et produire un signal électrique continu destiné à actionner lesdits moyens de récupération (214 - 222) ; et
des moyens de temporisation (208, 212) pour recevoir ledit signal électrique alternatif et produire un signal d'impulsion d'horloge afin de piloter lesdits moyens de récupération (214 - 222).

4. Système de récupération d'information à couplage inductif selon la revendication 3, caractérisé en ce que lesdits moyens redresseurs (204) comprennent un régulateur à shunt (256) pour shunter le courant excédentaire produit par ledit redresseur (204) à la masse lorsque ladite bobine de transpondeur (202) reçoit un signal électrique alternatif excessif, de sorte que le niveau de tension dudit signal électrique continu est maintenu dans une plage de fonctionnement desdits moyens de récupération (214 - 222).

5. Système de récupération d'information à couplage inductif selon la revendication 3 ou 4, caractérisé en ce que lesdits moyens redresseurs (204) sont un redresseur à pont pleine onde (204).

6. Système de récupération d'information à couplage inductif selon la revendication 4 ou 5, caractérisé en ce que ledit régulateur à shunt (256) est un transistor parasite (256).

7. Système de récupération d'information à couplage inductif selon l'une quelconque des revendications 2 à 6, caractérisé en ce que lesdits moyens de récupération (208 - 222) comprennent :
des moyens de temporisation (208) pour recevoir ledit signal électrique alternatif et créer un signal d'impulsion d'horloge ;
des moyens de récupération à mémoire (212, 214) pour recevoir ledit signal d'impulsion d'horloge et délivrer un signal de code d'identité contenant ladite information ;
et dans lequel, de plus, des moyens de commande numérique (216, 218, 220) comprennent :
des moyens logiques (216) pour recevoir ledit signal de code d'identité et délivrer un signal de données numériques représentant ledit signal de code d'identité ;
des moyens de modulation de phase (218, 220) pour recevoir ledit signal d'impulsion d'horloge et ledit signal de données numériques et pour générer un signal de pilotage modulé en phase, la phase dudit signal de pilotage étant modifiée lorsqu'un bit de données de niveau logique "0" provenant dudit signal de données numériques doit être transmis, et n'étant pas modifiée lorsqu'un bit de données de niveau logique "1" provenant dudit signal de données numériques doit être transmis ; et
des moyens de pilotage (210) pour recevoir ledit signal de pilotage modulé en phase et délivrer ledit signal de sous-porteuse modulé en phase, de sorte que ladite bobine de transpondeur (202) est forcée de transmettre ledit signal de sous-porteuse dans ledit champ (26, 28) à la fréquence dudit premier signal de puissance.

8. Système de récupération d'information à couplage inductif selon la revendication 7, caractérisé en ce que lesdits moyens de modulation de phase (218, 222) comprennent :
des moyens de sélection de phase (218) pour recevoir ledit signal de pilotage et ledit signal de données numériques et pour moduler en phase ledit signal de pilotage avec ledit signal de données numériques en forçant ledit signal de pilotage à sauter une impulsion cyclique d'horloge pour modifier la phase dudit signal de pilotage et en forçant ledit signal de pilotage à ajouter une impulsion cyclique d'horloge lorsque la phase dudit signal de pilotage est inversée ; et
des moyens doubles de verrouillage de phase (222) pour éliminer la composante de tension positive de chaque impulsion cyclique d'horloge ajoutée audit signal de pilotage et délivrer ledit signal de pilotage modulé, de sorte que deux impulsions cycliques d'horloge consécutives ne seront pas reçues par lesdits moyens de pilotage.

9. Procédé pour générer un signal d'identification électromagnétique en réaction à la réception d'un signal d'interrogation électromagnétique transmis alternant à une première fréquence, comprenant le fait de
convertir (204, 208, 220) le signal d'interrogation reçu en un signal de puissance, un signal d'horloge et un signal de modulation comprenant une série d'impulsions survenant à une deuxième fréquence ;
utiliser ledit signal d'horloge pour récupérer (212, 214) à un débit binaire prédéterminé un signal d'identification codé numériquement et stocké (24), composé d'une chaîne de bits "1" d'un premier état logique et de bits "0" d'un deuxième état logique ;
décaler en phase ledit signal de modulation avec le signal codé numériquement récupéré ; et
retransmettre le signal d'identification électromagnétique sous la forme d'un signal de sous-porteuse modulé en phase,
caractérisé par le fait de
utiliser ledit signal codé numériquement pour décaler (216 - 222) la phase d'un bloc desdites impulsions du signal de modulation lorsque l'état d'un bit particulier dudit signal codé est dudit premier état, et ne pas décaler la phase d'un même bloc desdites impulsions du signal de modulation lorsque l'état d'un bit particulier dudit signal codé est dudit deuxième état ; et
utiliser le signal de modulation décalé en phase pour moduler en amplitude (210) ledit signal d'interrogation et forcer le signal d'identification électromagnétique résultant à être retransmis sous la forme d'un signal de sous-porteuse dont la phase est décalée de 180° lorsqu'un bit "1" est retransmis et n'est pas décalée lorsqu'un bit "0" est retransmis.

10. Procédé selon la revendication 9, caractérisé en ce que ladite première fréquence est de 134 kHz et ladite deuxième fréquence est de 67 kHz.

11. Procédé selon la revendication 10, caractérisé en ce que ledit débit binaire prédéterminé est de 8,375 kHz.

12. Transpondeur (30) pour générer un signal d'identification électromagnétique en réponse à la réception d'un signal d'interrogation électromagnétique transmis alternant à une première fréquence, comprenant :
des premiers moyens (202, 204, 208, 212) pour recevoir et convertir le signal d'interrogation reçu en un signal de puissance, un signal d'horloge et un signal de modulation comprenant une série d'impulsions survenant à une deuxième fréquence ;
des moyens de stockage de données (214) pour stocker un signal d'identification codé numériquement, composé de bits "1" d'un premier état logique et des bits "0" d'un deuxième état logique ;
des deuxièmes moyens (216) réagissant audit signal de puissance et audit signal d'horloge et agissant pour récupérer le signal codé numériquement stocké depuis lesdits moyens de stockage (214) et pour délivrer celui-ci à un débit binaire prédéterminé ;
des troisièmes moyens (218, 220) pour décaler en phase ledit signal de modulation avec le signal codé numériquement récupéré ; et
des quatrièmes moyens (210) pour utiliser ledit signal de modulation décalé en phase afin de moduler ledit signal d'interrogation et de retransmettre ledit signal d'identification électromagnétique sous la forme d'un signal de sous-porteuse,
caractérisé en ce que
ladite deuxième fréquence est égale à la moitié de ladite première fréquence ;
lesdits troisièmes moyens (218, 220) réagissent au signal codé numériquement récupéré et agissent pour décaler la phase d'un bloc desdites impulsions de signal de modulation lorsque l'état d'un bit particulier dudit signal codé est du premier état, et ne pas décaler la phase d'un bloc desdites impulsions de signal de modulation lorsque l'état d'un bit particulier dudit signal codé est du deuxième état ; et
lesdits quatrièmes moyens (210) réagissent aux blocs décalés et non décalés d'impulsions du signal de modulation et agissent pour forcer lesdits premiers moyens (204) à moduler en amplitude le signal d'interrogation reçu et forcer un signal d'identification électromagnétique à être retransmis sous la forme d'un signal de sous-porteuse à ladite deuxième fréquence, dont la phase est décalée de 180° lorsqu'un bit "1" est retransmis et dont la phase n'est pas décalée lorsqu'un bit "0" est retransmis.

13. Transpondeur (30) selon la revendication 12, caractérisé en ce que lesdits premiers moyens (202, 204, 208, 212) comprennent :
des moyens à bobine (202) pour recevoir une énergie électromagnétique contenant ledit signal d'interrogation et pour développer de l'énergie électromagnétique contenant ledit signal d'identification ;
des moyens redresseurs (204) couplés auxdits moyens à bobine (202) pour convertir de l'énergie contenue dans ledit signal d'interrogation en ledit signal de puissance ; et
des moyens de récupération d'horloge (208, 212) couplés auxdits moyens à bobine (202) et agissant pour convertir une énergie contenue dans ledit signal d'interrogation en ledit signal d'horloge, la fréquence dudit signal d'horloge étant de f/n, où f est la fréquence dudit signal d'interrogation et n est un nombre entier supérieur à 2.

14. Transpondeur (30) selon la revendication 13, caractérisé en ce que lesdits moyens redresseurs (204) comprennent un régulateur à shunt (256) pour shunter le courant excédentaire produit par ledit redresseur (204) à la masse du circuit lorsque l'amplitude dudit signal d'interrogation dépasse une limite prédéterminée, de sorte que le niveau de tension dudit signal de puissance est maintenu dans une plage de fonctionnement prédéterminée.

15. Transpondeur (30) selon la revendication 14, caractérisé en ce que ledit régulateur à shunt (256) est formé par un transistor parasite (256).

16. Transpondeur (30) selon la revendication 13, caractérisé en ce que lesdits moyens redresseurs (204) sont formés par trois diodes à jonction (250, 252, 256) et par un transistor à effet de champ à canal p (254).

17. Transpondeur (30) selon la revendication 16, caractérisé en ce que ledit régulateur à shunt (204) est formé par un transistor parasite (256) associé à l'une desdites diodes à jonction (250, 252, 256).

18. Transpondeur (30) selon la revendication 12, caractérisé en ce que lesdits quatrièmes moyens (210) comprennent un commutateur de modulation (210) réagissant aux impulsions de signal de modulation décalées et non décalées et agissant pour court-circuiter lesdits moyens à bobine (202) pendant la durée de chacune desdites impulsions.

19. Transpondeur (30) selon la revendication 18, caractérisé en ce qu'il comprend des moyens de verrouillage à double impulsion (222) situés sur le trajet du signal entre lesdits troisièmes moyens (218, 220) et ledit commutateur de modulation (210), lesdits moyens de verrouillage (222) réagissant audit signal d'horloge et audit signal codé numériquement et agissant pour empêcher ledit commutateur de modulation (210) d'être actionné durant deux impulsions successives dudit signal d'horloge.

20. Transpondeur (30) selon les revendications 16 et 19, caractérisé en ce que ledit commutateur de modulation (210) est un transistor à effet de champ à canal n (210) couplé sur l'une (256) desdits diodes à jonction (250, 252, 256).
